# EUROPEAN PATENT SPECIFICATION

(11) **EP 4 491 068 B1**
(45) Date of publication and mention of the grant of the patent: **16.09.2026**
(21) Application number: 23185503.2
(22) Date of filing: 14.07.2023
(51) Int. Cl.: A47J 31/36, A47J 31/44, A47J 31/60

(54) **MACHINE, CRUSHING UNIT FOR SUCH A MACHINE AND METHOD FOR PREPARING A BEVERAGE WITH SUCH A MACHINE**
MASCHINE, ZERKLEINERUNGSEINHEIT FÜR SOLCH EINE MASCHINE UND VERFAHREN ZUR HERSTELLUNG EINES GETRÄNKS MIT SOLCH EINER MASCHINE
MACHINE, UNITÉ DE BROYAGE POUR UNE TELLE MACHINE ET PROCÉDÉ DE PRÉPARATION D'UNE BOISSON AVEC UNE TELLE MACHINE

(43) Date of publication of application: 15.01.2025
(73) Proprietor: Société des Produits Nestlé S.A., 1800 Vevey (CH)
(72) Inventor: ZIMMER, Johannes, 1012 Lausanne (CH); GIRARDIN, Pascal, 1091 Grandvaux (CH); ABEGGLEN, Daniel, 1091 Grandvaux (CH); MORA, Federico, 1110 Morges (CH); LUETHI, Barthelemy, 1844 Villeneuve (CH); HAERI, Martin, 1006 Lausanne (CH); HEYDEL, Christophe Sébastien Paul, 2025 Chez Le Bart (CH)
(74) Representative: Rosolen-Delarue, Katell

(56) References cited:
- EP-B1- 2 291 312
- WO-A1-2011/051867
- WO-A1-2014/078893
- KR-B1- 102 335 510
- US-A1- 2021 068 580

## Description

### 1. Field of the invention

The present invention is directed to a preparation machine for preparing a beverage, in particular from single-serve capsules. The invention is further directed to a crushing unit for being used in such a preparation machine. The present invention is also directed to a method for preparing a beverage with such a preparation machine. Single-serve capsules generally include a capsule body, which may be made out of plastics or aluminum, and an organic component, like ground coffee, which is contained in the capsule body.

### 2. Technical background

In the field of single-serve capsules there is a general effort to reduce waste and to increase the disposability and recyclability of processed capsules. Usually the processed capsules must be collected at home by the users and brought from time to time to a collecting station like a shop. Then large quantities of processed capsules must be sent from the collecting station to a dedicated plant equipped with large machines which process bulks of processed capsules to separate the capsule bodies from the organic component, e.g. ground coffee. Once separated the organic component and the capsule bodies may be transferred to other plants for further processing and eventually recycling.

However, the whole process is complex and long until the capsule materials, in particular the organic component, may eventually be recycled and/or composted. In particular, it requires the user to carry loads of processed capsules that are relatively heavy and cumbersome all the way to the collecting station. Besides, the capsule body cannot be emptied from the organic component before the processed capsule is disposed of in a trash bin at home. It is not possible for the user to compost and recycle at home the used organic components.

Document WO 2011 / 051 867 A1 refers to a machine for producing and dispensing beverages with a unit for injecting a liquid into capsules and a crushing unit for the capsules after use.

### 3. Summary

It is thus an aspect of the present disclosure to provide a preparation machine for preparing a beverage according to claim 1.

Thus, the capsule can be crushed by the crushing element(s) to release most or all of the used beverage component from the cavity. For this crushing, the crushing element can unshape or even shred the capsule body. The cavity can thus be emptied and the beverage component separated from the capsule body. Handling the released beverage component and the crushed capsule body can be more efficient, which enhances the compostability and the recyclability.

**In** the present disclosure, the term "capsule" may be understood as designating any container that contains a dose of beverage component(s), for example a pod or a cartridge. Such dose of beverage component(s) is usually suitable for preparing one beverage (single-serve), two or a few beverages. A capsule may include an inner wall arranged to divide the cavity into two or more sub-cavities for respectively containing as many beverage components. The preparation machine may be configured to process capsules of a given shape, for example symmetrical, frustoconical, spheroidal, etc.

The preparation machine enables to efficiently handle the released beverage component separately from the crushed capsule body, which enhances the disposability and recyclability of processed capsules. Further, the user can have the beverage component composted e.g. at home, and the user is only required to dispose of the crushed capsule bodies, hence a relatively light and compact load.

As the crushing unit is part of the preparation machine, it provides an all-in-one compact equipment for processing the capsules and enhancing their disposability and recyclability. Moreover, the crushing unit may be added to the preparation machine, thus allowing retrofitting the existing preparation machines.

The beverage component may be selected within the list of: roast and ground coffee, a soluble ingredient such as milk-based, chocolate, soup, infusion or herbal tea ingredients as well as nutritional soluble compositions, and more generally any liquid edible composition for human or animal consumption and/or mixtures thereof.

The fluid may be water or milk. During preparation of a beverage, the beverage component may be made to interact with the fluid injected in the capsule in order to produce any ingestible substance, for example coffee, tea, milk, cream, soup, puree, medication, etc.

The expression "crush the capsule body" may be understood with the usual meaning of pressing the capsule body very hard so that its shape is destroyed or so that it breaks or tears into pieces.

When the capsule is crushed, the capsule body can be shredded into pieces, or at least the cavity can be shrunk to a volume of less than 50%, preferably less than 25%, more preferably less than 10%, of the volume the cavity has before the capsule body is crushed.

The pressure exerted by the crushing element on the capsule body may advantageously be selected to be higher than the strength of the capsule body, which strength is determined by the dimensions and materials of the capsule body.

According to an embodiment, the crushing element may include a crusher or a shredder.

Thus, the crushing element can completely unshape or even shred the capsule body efficiently.

The crushing element is movable in rotation so as to crush the capsule body, the crushing element preferably forming a crushing mill.

Thus, the crushing element can be quite compact as it can rotate on itself to carry out the crushing of the capsule body.

The crushing element comprises at least one crushing tool having a plurality of sharp sections.

Thus, the crushing element can efficiently crush the capsule body.

In an implementation, the crushing unit may have a counter-wall partially surrounding the crushing tool, wherein a gap between the crushing tool and the counter-wall is preferably smaller than the largest dimension of the capsule. Thus, the counter-wall can keep the capsule in contact with the crushing tool while the capsule body is being crushed by the crushing tool.

The gap between the crushing tool and the counter-wall may range between 10% and 90% of the largest dimension of the capsule, more preferably between 30% and 70% of the largest dimension of the capsule.

In an implementation, the crushing tool may include a screw. The thread of the screw, in particular the outer portions thereof, may have a plurality of sharp sections. Sharp sections may also be arranged on the shaft of the screw. The thread of the screw may have an outer diameter that varies, either continuously or discretely, along the rotation axis of the crushing tool. The thread of the screw may have a pitch smaller than the largest dimension of the capsule. The pitch may range between 20% and 80% of the largest dimension of the capsule, more preferably between 30% and 70% of the largest dimension of the capsule. The pitch may vary, either continuously or discretely, along the rotation axis of the crushing tool.

Thus, the capsule body can first be crushed in large pieces by the first thread of large dimensions, then be crushed in smaller pieces by the second thread of smaller dimensions.

The crushing element comprises at least two crushing tools, said crushing tools extending substantially parallel and close to one another, said crushing tools being configured to rotate in opposite directions.

Thus, as the crushing tools counter-rotate and are arranged side-by-side, they can grip the capsule and quickly crush the capsule body. In the present disclosure, the adverb "substantially" may characterize a deviation of less than 20%, preferably less than 10%, more preferably less than 20% from the specified physical quantity, in particular position.

In an implementation, the crushing tools may be configured so that their respective sharp sections interpenetrate. So the volume occupied by the one crushing tool in one rotation may intersect with the volume occupied by the other crushing tool in one rotation. Thus, the interpenetrating crushing tools can cooperate to more firmly grip the capsule.

In an alternative implementation in which the respective sharp sections do not interpenetrate, the crushing tools may be arranged such that the largest gap between them is smaller than a capsule, the largest gap being preferably smaller than 75%, preferably smaller than 50%, more preferably smaller than 25%, of the largest dimension of the capsule. Thus, the crushing tools can cooperate to firmly grip the capsule.

According to an embodiment, the preparation machine may further comprise a driving unit configured to move the crushing element, the driving unit including a motor or a manual actuator.

Thus, the driving unit can transmit a mechanical force to the crushing element, which can in turn crush the capsule body.

In an implementation, the motor may be electrically connected to the preparation unit such that the motor is powered by the same source as the preparation unit.

In an implementation, the motor may be also coupled to the preparation unit so as to displace a movable chamber section and selectively close the preparation chamber.

In an implementation, the manual actuator may be a crank or a lever, the crank or lever being coupled to the preparation unit so as to displace a movable chamber section and selectively close the preparation chamber.

In an implementation, the driving unit may further comprise a mechanism configured to transmit a force from the motor or the manual actuator to the crushing element(s).

According to an embodiment, the preparation machine may further comprise a separation unit configured to separate the crushed capsule body from the beverage component released from the cavity.

Thus, the released beverage component can be handled, in particular composted or recycled, separately from the crushed capsule body.

The separation unit be arranged next to the crushing unit, preferably downstream the crushing unit such that a crushed capsule body may move from the crushing unit to the separation unit, for example by the action of gravity. Alternatively, the separation unit may be part of the crushing unit.

According to an embodiment, the separation unit may comprise a filtering grid configured to retain the crushed capsule body and to let all or part of the beverage component released from the cavity pass through the filtering grid.

Thus, the filtering grid enables a quick separation of the crushed capsule body from the released beverage component. The released beverage component, which is generally a flowable or pasty substance, can pass to one side of the filtering grid, while the crushed capsule body remains on the other side of the filtering grid. The filtering grid can act like a solid/liquid filter.

Preferably, the filtering grid may have holes dimensioned to prevent chunks of the capsule body from passing through it. Thus, the filtering grid can act as a filter.

In an implementation, the filtering grid may be arranged below the crushing element such that the crushed capsule body and the beverage component released from the cavity may fall respectively onto and through the filtering grid by the action of gravity.

In an implementation, the filtering grid may extend substantially horizontally, the released beverage component passing through the filtering grid preferably by the action of gravity. In addition, the separation unit may further comprise an assisting device configured to transmit vibrations or impacts to the filtering grid. Thus, the assisting device can increase the flowrate of the released beverage component in passing through the filtering grid.

According to an embodiment, the preparation machine may further comprise a collecting chamber for collecting the beverage component released from the cavity and the crushed capsule body, preferably in separate sections of the collecting chamber, the collecting chamber being preferably part of the crushing unit or of the separation unit.

Thus, the collecting chamber enables the user to conveniently handle the released beverage component collected on the one section of the collecting chamber, and the crushed capsule bodies on the other section of the collecting chamber.

In an implementation, the separate sections may be arranged side-by-side or, alternatively, atop one another. Each one of the separate sections may be formed by a receptacle that can be inserted in and removed from the preparation machine quickly and independently from the receptacle of the other section.

Alternatively to this embodiment, the preparation machine may store the released beverage component together with the crushed capsule bodies in a common container. In this alternative, the user shall shake the common container to manually separate the crushed capsule bodies from the released beverage component by density segregation.

According to an embodiment, the preparation unit may be detachably coupled to the crushing unit, to the separation unit if present, and/or to the collecting chamber if present.

Thus, the user can detach from and reattach to the preparation machine the crushing unit and the separation unit if present, in particular to dispose of the crushed capsule crushed and the released beverage component.

In an implementation, the preparation machine may have an accommodating space configured to accommodate most or all of the crushing unit and/or most or all of the separation unit if present. The accommodating space may be formed by a cavity located below, preferably under, the preparation machine. Alternatively, the accommodating space may be located adjacent the preparation unit, preferably next to a side of the preparation unit.

In an implementation, the preparation machine may further comprise coupling means for detachably coupling the crushing unit and/or the separation unit, if present, to the preparation unit.

In an implementation, the crushing unit and/or the separation unit, if present, may be detached by translation out of the preparation unit.

In an implementation, the preparation machine may further comprise locking means configured to lock the crushing unit and/or the separation unit, if present, to the preparation unit. Thus, the locking means can prevent an unintended detachment of the crushing unit and/or the separation unit if present. The locking means may preferably be configured for reversible elastic snap-fitting of said units on one another.

According to an embodiment, the preparation machine may further comprise a transfer section configured to allow a defined transfer, preferably by the action of gravity, of the capsule from the preparation chamber to the crushing unit.

Thus, the capsule can automatically transit from the preparation unit to the crushing unit, which enhances the convenience for the user.

In an implementation, the transfer section may be a passage, which joins the preparation chamber to the crushing unit and which is oriented substantially vertically. The capsule may be transferred by simply falling through the passage. Thus, the passage forms a compact transfer section. Preferably, the passage may be an opening or a duct.

In an implementation, the crushing unit and the preparation unit may be configured such that, when the crushing unit and the preparation unit are coupled, the capsule may be displaced, preferably by the action of gravity, from the preparation chamber to a place in contact with the crushing element, for example after the capsule has been processed in the preparation unit.

According to an embodiment, the crushing unit may further comprise a cleaning device, the cleaning device being fluidly connected with a fluid injection unit, the cleaning device being configured to rinse the capsule body with some of the fluid after the capsule has been processed in the preparation unit, the cleaning device being arranged downstream the crushing unit.

Thus, the cleaning device can enhance removal of beverage component that might be stuck to the capsule body or pieces thereof.

In an implementation, the fluid injection unit may be further configured to inject fluid in the capsule when the capsule is in the preparation chamber so as to prepare the beverage. So the fluid injection unit can supply fluid for preparing a beverage. As the same fluid injection unit can be used both for preparing a beverage and for rinsing the capsule body, the overall footprint can be reduced.

According to an embodiment, the preparation machine may further comprise a dispensing unit for dispensing the beverage out of the preparation unit.

The crushing unit of the preparation machine according to any one of the preceding aspect, embodiments and implementations may be configured to be coupled, preferably in a detachable manner, to the preparation unit such that the capsule may be transferred from the preparation chamber to the crushing unit, wherein the crushing unit may have i) the crushing element and ii) a drive connection for functionally connecting the crushing element with a or the driving unit of the preparation machine to selectively move the crushing element.

Thus, when the crushing unit is used in a preparation machine, the processed capsule can be crushed by the crushing element to release most or all of the used beverage component from the cavity.

Still another aspect of the present disclosure is directed to a method for preparing a beverage with a preparation machine according to any one of preceding aspect, embodiments and implementations, the method comprising:
- receiving a capsule in the preparation chamber,
- preparing a beverage by injecting the fluid in the capsule such that the fluid interacts with the beverage component,
- transferring the capsule from the preparation unit to the crushing unit after the capsule has been processed in the preparation unit, and
- moving the crushing element to crush the capsule body such that at least part of the beverage component is released from the cavity.

Thus, when this method is carried out, the processed capsule can be crushed by the crushing element to release most or all of the used beverage component from the cavity. In the present disclosure, the relative terms "horizontal", "vertical", "below", "under", "bottom" and "top" generally refer to the configuration where the preparation machine is in service for preparing a beverage.

The words "comprise", "include", "have" and their derivatives are to be interpreted inclusively rather than exclusively. The term "and/or" used in the context of "X and/or Y" should be interpreted as "X," or "Y," or "X and Y."

### 4. Brief description of drawings

Further features, details and advantages of the present invention are described hereinafter, in particular in relation to the appended figures, which illustrate some of the afore-described aspects, embodiments and implementations thereof, and in which:
- Fig.1: shows a schematic cross-sectional view of a preparation machine including a crushing unit according to an embodiment of the present invention to illustrate a step of preparing a beverage;
- Fig.2: shows a schematic cutaway view of the preparation machine of Fig.1, cut along the same plane as Fig.1;
- Fig.3: shows a view similar to Fig.1 to illustrate a step of transferring the capsule from the preparation unit to the crushing unit after the capsule has been processed in the preparation unit;
- Fig.4: shows a view similar to Fig.1 after the transferring step has been performed;
- Fig.5: shows a view similar to Fig.1 to illustrate a step of crushing the capsule body, thus releasing beverage component from the cavity;
- Fig.6: shows a view similar to Fig.1 to illustrate steps of separating and collecting the released beverage component and the crushed capsule body;
- Fig.7: shows a view similar to Fig.1 of a preparation machine including a crushing unit according to another embodiment of the present invention;
- Fig.8: shows a view similar to Fig.2 of the preparation machine of Fig.7;
- Fig.9: shows a view similar to Fig.3 of the preparation machine of Fig.7;
- Fig.10: shows a view similar to Fig.4 of the preparation machine of Fig.7;
- Fig.11: shows a view similar to Fig.5 of the preparation machine of Fig.7;
- Fig.12: shows a view similar to Fig.6 of the preparation machine of Fig.7; and
- Fig.13: shows a flowchart of a method according to the present invention for preparing a beverage.

### 5. Detailed description

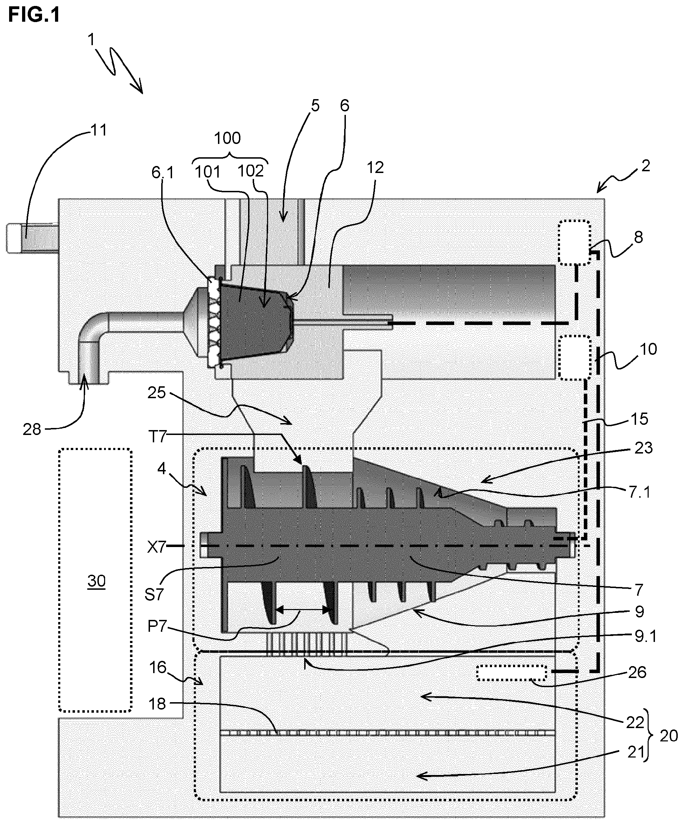

Figs.1-2 show a preparation machine 1 for preparing a beverage by injecting a fluid in a capsule 100. The preparation machine 1 may be of a Nespresso Essenza Mini^{®} or a Nespresso Pixie^{®}. The capsule 100 may be a Nespresso original^{®}.

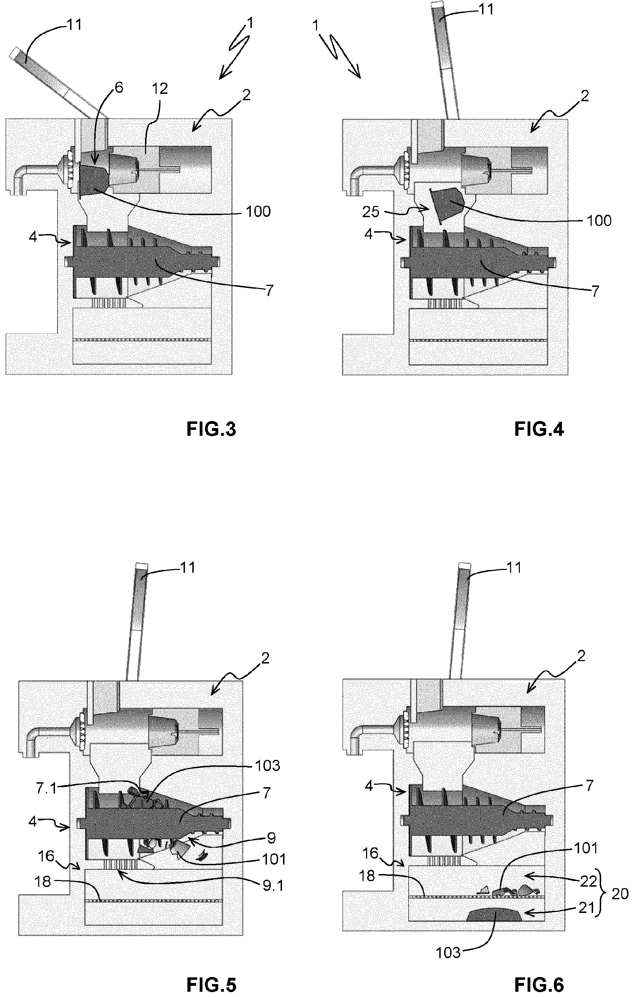

The capsule 100 has i) a capsule body 101 defining a cavity 102 and ii) a beverage component 103 (Fig.6) contained within the cavity 102. The beverage component 103 may be roast and ground coffee.

The preparation0 machine 1 comprises a preparation unit 2 and a crushing unit 4. The preparation unit 2 may be located above the crushing unit 4. The preparation machine 1 has an introduction duct 5 (Figs.1-2) for introducing the capsule 100 into the beverage preparation unit 2. The preparation unit 2 has a preparation chamber 6 (Figs.1-2), which is suitable for receiving the capsule 100. The preparation chamber 6 may include a pyramid plate 6.1 covered with sharp pyramids configured to tear open a closing membrane of the capsule 100 (Figs.1-2) to let the prepared beverage flow out of the capsule 100.

The preparation unit 2 also has a fluid injection unit 8 (Fig.1), which may be configured for injecting the fluid in the capsule 100 to prepare the beverage when the capsule is in the preparation chamber 6. The fluid may be hot water under pressure. During preparation of a beverage (Fig.1), the beverage component 103 may be made to interact with the fluid injected in the capsule 100 in order to produce a cup of coffee.

The crushing unit 4 has a crushing element 7. As shown in Figs.4-6, the crushing element 7 is movable to crush the capsule body 101 in order to release most or all of the beverage component 103 from the cavity 102 after the capsule 100 has been processed in the preparation unit 2. In the example of Figs.1-6, the crushing element 7 may be rotatable around an axis X7.

The crushing element 7 may comprise a crushing tool formed by a screw, which has a shaft S7 extending along axis X7, a thread T7 and a pitch P7. The axis X7 may be substantially horizontal in the example of Figs.1-2. The screw may have a plurality of sharp sections, which are formed by the outer portions of the thread T7.

The crushing unit 4 may have a counter-wall 7.1, which surrounds partially the crushing element 7. A gap (not shown) between the screw and the counter-wall 7.1 may be smaller than 50% of the largest dimension of the capsule 100, say the length of the capsule body 101.

The thread T7 may have an outer diameter that decreases along the axis X7 discretely, for example in three stages, from the left to the right of Figs.1-2. Likewise, the shaft S7 may have a diameter (inner diameter of thread T7) that decreases discretely along the axis X7. The thread T7 may have a pitch P7 that is smaller than the largest dimension of the capsule 100, say the length of the capsule body 101. The pitch P7 may decrease discretely along the axis X7 and range between 30% and 70% of the largest dimension of the capsule 100.

In the example of Figs.1-8, the capsule body 101 can be first crushed in large pieces by the large thread and pitch (left of Figs.1-2), then crushed in small pieces by the median thread and pitch (center of Figs.1-2), and finally crushed in tiny pieces by the small thread and pitch (right of Figs.1-2). As the processed capsule 100 advances along the shaft S7 (from left to right) it is being more and more crushed. In the end, the cavity 102 has disappeared or is shrunk to less than 10% of its initial volume, that is, the volume the cavity 102 had before the capsule body 101 is crushed. Thus, practically all of the used beverage component 103 is released from the cavity 102.

The crushing unit 4 may have a discharging opening 9, which is configured for discharging pieces of the crushed capsule body 101 and some released beverage component 103 out of the crushing element 7, preferably downward and by the action of gravity.

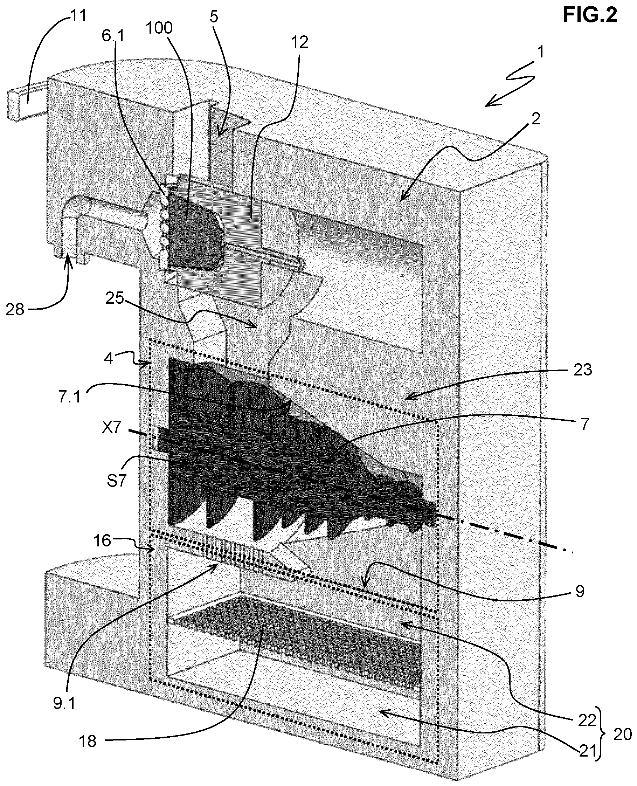

As visible in Fig.2, the discharging opening 9 may be arranged opposite the counter-wall 7.1 with respect to the crushing element 7. In particular, the discharging opening 9 may be located under the portion of the screw thread having the median and small diameters (right of Fig.2), which is where the capsule 100 should be most crushed.

Under the portion of the screw thread having the large diameter (left of Fig.2), the crushing unit may have discharging passages 9.1 for discharging some beverage component 103. The discharging passages 9.1 may be configured to let pass only beverage component 103 and not the large pieces of crushed capsule body 101 which keep being crushed until they reach the discharging opening 9.

The preparation machine 1 may further comprise a driving unit 10 (Fig.1), which is configured to rotate the crushing element 7 in rotation around axis X7. The driving unit 10 may include a motor (not shown), which may be powered by the same source as the preparation unit 2 and the fluid injection unit 8.

The driving unit 10 may be mechanically connected with the crushing element 7 in order to transmit a mechanical force, possibly via a mechanism (not shown), to the crushing element 7. In turn, the crushing element 7 can crush the capsule body 101 as shown in Fig.5-6.

Thus, when the crushing unit 4 is used in a preparation machine 1, the processed capsule 100 can be crushed by the crushing element 7 to release most or all of the used beverage component 103 from the cavity 102.

The preparation machine 1 may further comprise a crank 11 which may be coupled to the preparation unit 2, so as to manually displace a movable chamber section 12, and thus selectively open or close the preparation chamber 6.

In Figs.1-2 the crank 11 may be horizontally placed in a first end position as the movable chamber section 12 is closing the preparation chamber 6. In Fig.3 the crank 11 may be in an intermediate position as the preparation chamber 6 is partly reopened. In Fig.4 the crank 11 may be in a vertical position as the preparation chamber 6 is fully open.

In Figs.5-6 the crank 11 is placed in a second end position past the vertical position of Fig.4. In this position past the vertical position, the crank 11 may trigger a switch (not shown), which actuates the driving unit 10 which in turn moves the crushing element 7.

The crushing unit 4 may further have a drive connection 15 functionally connecting the crushing element 7 with the driving unit 10 to selectively move the crushing element 7, here in rotation around axis X7.

The crushing unit 4 may be activated after a predetermined time, e.g. 5 seconds, so as to ensure that the capsule 100 has reached the crushing unit 4 and can undergo the crushing step.

In addition to the crushing unit 4 the preparation machine 1 may comprise a separation unit 16, which is configured to separate the crushed capsule body 101 (Figs.5-6) from the beverage component 103 released from the cavity 102. The separation unit 16 can receive the crushed capsule body 101 and the beverage component 103 from the discharging opening 9 and from the discharging passages 9.1.

The separation unit 16 may comprise a filtering grid 18, which is configured to retain the capsule body 101 crushed into pieces (Figs.5-6) and to let the beverage component 103 released from the cavity 102 pass through the filtering grid 18 (Fig.6).

The filtering grid 18 may extend substantially horizontally and be arranged below the crushing element 7 such that the crushed capsule body 101 and the beverage component 103 released from the cavity may fall respectively onto and through the filtering grid 18 by the action of gravity.

The released beverage component 103 can pass to the bottom side of the filtering grid 18, while the crushed capsule body 101 remains on the top side of the filtering grid 18. After the separation, the released beverage component 103 (Figs.5-6) can be handled by the user separately from the crushed capsule body 101.

In the example of Figs.1-6, the filtering grid 18 may extend substantially in a horizontal plane perpendicular to the plane of Fig.1.

The preparation machine 1 may further comprise a collecting chamber 20 configured for collecting the released beverage component 103 and the crushed capsule body 101, respectively in separate sections 21, 22 arranged atop one another and separated by the filtering grid 18. The released beverage component 103 may be collected in the bottom section 21, while the crushed capsule bodies 101 may be collected in the top section 22. The separate sections 21, 22 may be formed as one receptacle that can be inserted in and removed from the preparation machine 1.

In the example of Figs.1-6, the collecting chamber 20 may be located below the separation unit 16 but the collecting chamber 20 is integral with the crushing unit 4 and with the separation unit 16, so the user can conveniently detach and reattach them altogether. Thus, the user can conveniently handle the released beverage component 103 and the crushed capsule bodies 101 and empty the collecting chamber 20.

The preparation unit 2 may be detachably coupled to the crushing unit 4, to the separation unit 16, and/or to the collecting chamber 20. The crushing unit 4, the separation unit 16 and/or the collecting chamber 20 may be detached from the preparation unit 2 by translation parallel to axis X7.

The preparation machine 2 may have an accommodating space 23 for accommodating most or all of the crushing unit 4, of the separation unit 16 and of the collecting chamber 20. The accommodating space 23 may be formed by a cavity located under the preparation unit 2.

The preparation machine 1 may further comprise coupling means (not shown) for detachably coupling the crushing unit 4 and/or the separation unit 16 to the preparation unit 2. The preparation machine 1 may further comprise locking means (not shown) for locking the crushing unit 4 and/or the separation unit 16 to the preparation unit 2. The locking means may preferably be configured for reversible elastic snap-fitting of said units on one another.

The preparation machine 1 may further comprise a transfer section 25 for allowing a transfer, by the action of gravity, of the capsule 100 from the preparation chamber 2 to the crushing unit 4. In Fig.2, the capsule 100 is passing through the transfer section 25. The transfer section 25 may be a passage joining the preparation chamber 6 to the crushing unit 4 and oriented substantially vertically. After the preparation chamber 6 opens, the processed capsule 100 can be free to fall through transfer section 25 and into the crushing unit 4, hence within the reach of the crushing element 7. The crushing element 7 can then grip the capsule 100, in particular against counter-wall 7.1, and crush the capsule 100.

The crushing unit 4 may further comprise a cleaning device 26 (Fig.1) for rinsing the capsule body 101 with fluid after the capsule 100 has been processed in the preparation unit 2. The cleaning device 26 can enhance removal of beverage component 103 from the crushed capsule body 101. The cleaning device 26 may be fluidly connected with the fluid injection unit 8 for a supply of fluid, for example water. The cleaning device 26 may be arranged downstream the crushing unit 4. The collecting chamber 20 may be configured to collect also the rinsing fluid after the rinsing has been carried out.

In addition or alternatively to the cleaning device 26, the preparation machine 1 may further comprise a drying module (not shown) configured for partly or totally dry out the beverage component. The drying module may be part of the separation unit 16. The drying module may be arranged close to the filtering grid 18. Thus, the drying module can enhance the separation of the beverage component 103 from the capsule body 101, in particular on the filtering grid 18.

The preparation machine 1 may further comprise a dispensing unit 28 for dispensing the beverage out of the preparation unit 2. The dispensing unit 28 may be fluidly connected with the preparation chamber 6 and have a duct for guiding the beverage out of the preparation machine 1. The dispensing unit 28 may further have a filling space 30 where a drinking cup of a user may be placed such that the beverage can be dispensed therein. The filling space 30 may be located in front of the crushing unit 4.

The collecting chamber 20 may further comprise level sensors (not shown), which are configured to issue respective signals representing the level of beverage component and of pieces of capsule body 101 in the separate sections 21 and 22. Upon receiving such signals the user can detach the collecting chamber 20 (or the whole separation unit 16) and empty its separate sections 21, 22, then reattach the collecting chamber 20 (or the whole separation unit 16).

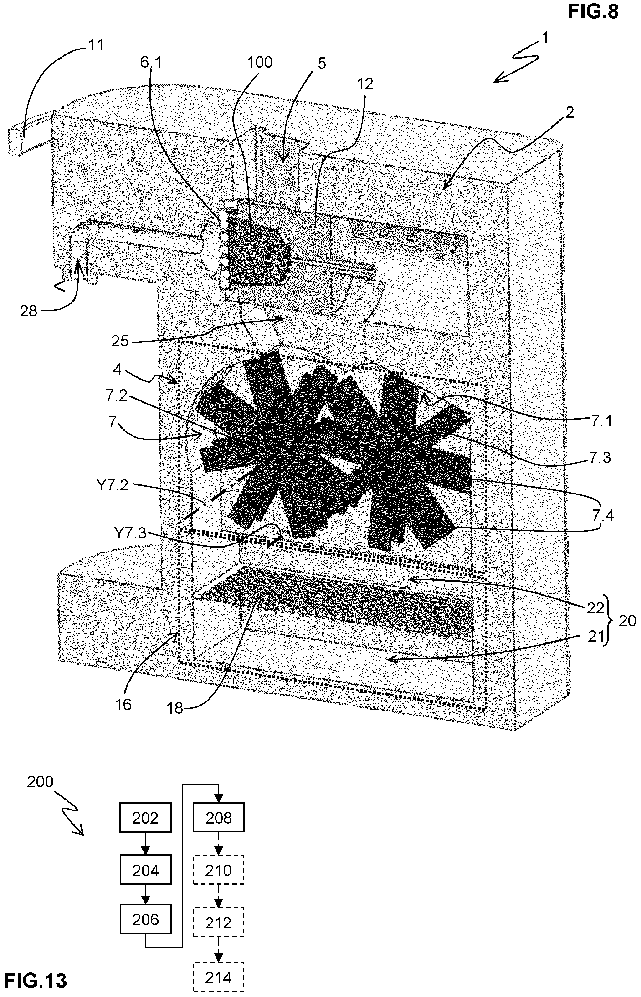

When the preparation machine 1 is in service, it can be operated to prepare a beverage according to a method 200 illustrated in Fig.13. The method 200 comprises:
- 202) receiving a capsule 100 in the preparation chamber 6,
- 204) preparing a beverage by injecting the fluid in the capsule 100 such that the fluid interacts with the beverage component 103,
- 206) preferably, transferring the capsule 100, via the transfer section 25, from the preparation unit 2 to the crushing unit 4 after the capsule 100 has been processed in the preparation unit 2, and
- 208) moving the crushing element 7 to crush the capsule body 101 such that at least part of the beverage component 103 is released from the cavity 102.

The user can thus easily handle the released beverage component 103 separately from the crushed capsule body 101. The disposability and recyclability of processed capsules 100 is enhanced. For example, the beverage component 103 can be composted at home.

Further, the method 200 may further comprise:
- 210) separating, by means of separation unit 16, the crushed capsule body 101 from the released beverage component 103, wherein the separation unit 16 may be part of the crushing unit;
- 212) actuating a cleaning device 26 to rinse the crushed capsule body 101 by means of fluid; and
- 214) collecting in the collecting chamber 20, preferably in the separate sections 21, 22 thereof, the released beverage component 103 and the crushed capsule body 101.

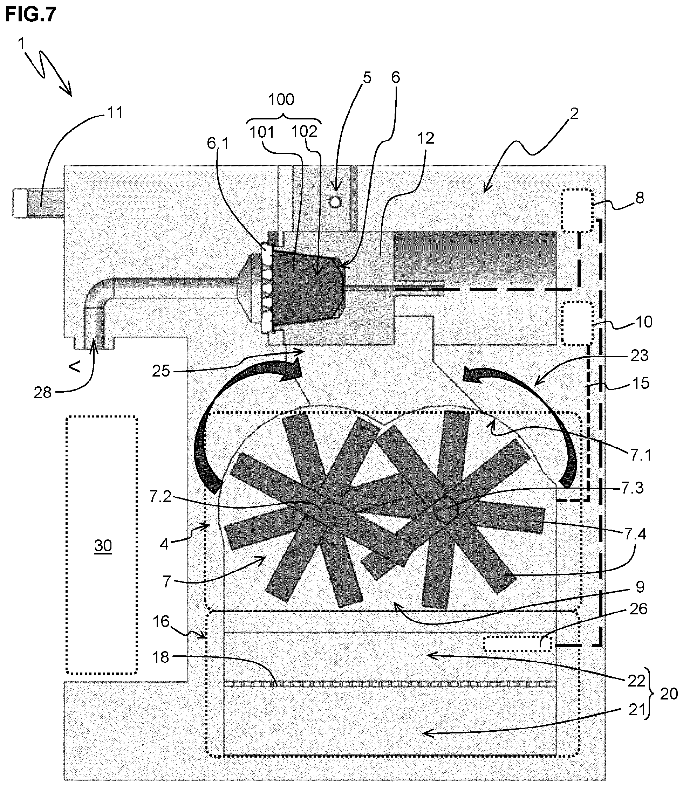

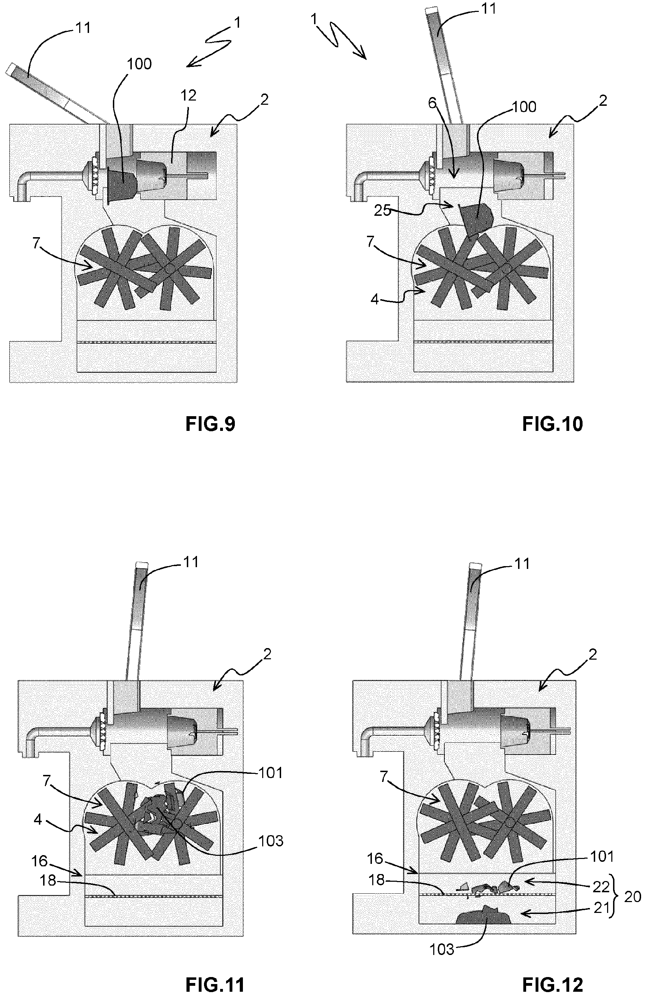

Figs.7-12 illustrate a second embodiment of a preparation machine 1. Inasmuch as the preparation machine 1 of Figs.7-12 is similar to the preparation machine 1 of Figs.1-6, the afore-detailed description may be applied to the preparation machine 1 of Figs.7-12. Some specificities of the embodiment of Figs.7-12 are described hereinafter. An element of the embodiment of Figs.7-12 is given the same reference sign or numeral as an element of the embodiment of Figs.1-6 that has that has a similar structure or function.

Like in Figs.1-6, the beverage preparation machine 1 of Figs.7-12 comprises: a preparation unit 2, a crushing unit 4, an introduction duct 5, a preparation chamber 6, a pyramid plate 6.1, a fluid injection unit 8, a crushing element 7, a counter-wall 7.1, a discharging opening 9, a driving unit 10, a crank 11, a movable chamber section 12, a drive connection 15, a separation unit 16, a filtering grid 18, a collecting chamber 20, separate sections 21, 22 of the collecting chamber 20, an accommodating space 23, a transfer section 25, a cleaning device 26, a dispensing unit 28, and a filling space 30.

Although the crushing element 7 of Figs.8-12 has a function similar to the crushing element 7 of Figs.1-7, it has a different structure. In lieu of a screw like in the embodiment of Figs.1-6, the crushing element 7 of the embodiment of Figs.8-12 may comprise a crushing mill. The crushing element 7 of Figs.8-12 may comprise two shafts 7.2 and 7.3 equipped with respective pluralities of sharp sections 7.4 e.g. blades.

The shafts 7.2 and 7.3 may be arranged to rotate around respective axes Y7.2 and Y7.3, which may be parallel and close to one another. The shafts 7.2 and 7.3 may be arranged to rotate in opposite directions, or counter-rotate, as symbolized by the arrows in Fig.7.

As the shafts 7.2 and 7.3 counter-rotate, they can grip the capsule and quickly crush the capsule body. The respective sharp sections 7.4 of shafts 7.2 and 7.3 interpenetrate, thus more firmly gripping the capsule 100, which enhances its crushing.

When the preparation machine 1 of the embodiment of Figs.8-12 is in service, it can be operated to prepare a beverage according to the method 200 illustrated in Fig.13.

As long as the present invention remains covered by the appended claims, the present invention is not limited to the afore-described aspects, embodiments and implementations, most of which may be combined.

## Claims

1. Preparation machine (1) for preparing a beverage by injecting a fluid in a capsule (100), the capsule (100) having i) a capsule body (101) defining a cavity (102) and ii) a beverage component (103) contained within the cavity (102), wherein the preparation machine (1) comprises:
- a preparation unit (2) having i) a preparation chamber (6) for receiving the capsule (100) and ii) means for injecting the fluid in the capsule (100) to prepare the beverage, and
- a crushing unit (4) having a crushing element (7), the crushing element (7) being movable so as to crush the capsule body (101) such that at least part of the beverage component (103) is released from the cavity (102) after the capsule (100) has been processed in the preparation unit (2),
wherein the crushing element (7) is movable in rotation so as to crush the capsule body (101), the crushing element (7) preferably forming a crushing mill, and
wherein the crushing element (7) comprises at least one crushing tool having a plurality of sharp sections (7.4),
**characterized in that** the crushing element (7) comprises at least two crushing tools (7.2, 7.3), said crushing tools (7.2, 7.3) extending substantially parallel and close to one another, said crushing tools (7.2, 7.3) being configured to rotate in opposite directions.

2. Preparation machine (1) according to claim 1, wherein the crushing element (7) includes a crusher or a shredder.

3. Preparation machine (1) according to any one of the preceding claims, wherein the preparation machine (1) further comprises a driving unit (10) configured to move the crushing element (7), the driving unit (10) including a motor or a manual actuator.

4. Preparation machine (1) according to any one of the preceding claims, further comprising a separation unit (16) configured to separate the crushed capsule body (101) from the beverage component (103) released from the cavity (102).

5. Preparation machine (1) according to claim 4, wherein the separation unit (16) comprises a filtering grid (18) configured to retain the crushed capsule body (101) and to let all or part of the beverage component (103) released from the cavity (102) pass through the filtering grid (18).

6. Preparation machine (1) according to any one of the preceding claims, further comprising a collecting chamber (20) for collecting the beverage component (103) released from the cavity (102) and the crushed capsule body (101), preferably in separate sections (21, 22) of the collecting chamber (20), the collecting chamber being preferably part of the crushing unit (4) or of the separation unit (16).

7. Preparation machine (1) according to any one of the preceding claims, wherein the preparation unit (2) is detachably coupled to the crushing unit (4), to the separation unit (16) if present, and/or to the collecting chamber (20) if present.

8. Preparation machine (1) according to any one of the preceding claims, further comprising a transfer section (25) configured to allow a defined transfer, preferably by the action of gravity, of the capsule (100) from the preparation chamber (6) to the crushing unit (4).

9. Preparation machine (1) according to any one of the preceding claims, wherein the crushing unit (4) further comprises a cleaning device (26), the cleaning device (26) being fluidly connected with a fluid injection unit, the cleaning device (26) being configured to rinse the capsule body (101) with some of the fluid after the capsule (100) has been processed in the preparation unit (2), the cleaning device (26) being arranged downstream the crushing unit (4).

10. Preparation machine (1) according to any one of the preceding claims, further comprising a dispensing unit (28) for dispensing the beverage out of the preparation unit (2).

11. Preparation machine (1) according to any one of the preceding claims, the crushing unit (4) being configured to be coupled, preferably in a detachable manner, to the preparation unit (2) such that the capsule (100) may be transferred from the preparation chamber (6) to the crushing unit (4), the crushing unit (4) having i) the crushing element (7) and ii) a drive connection for functionally connecting the crushing element (7) to a or the driving unit of the preparation machine (1) to selectively move the crushing element (7).

12. Method (200) for preparing a beverage with a preparation machine (1) according to any one of claims 1 to 10, the method (200) comprising:
- 202) receiving a capsule (100) in the preparation chamber (6),
- 204) preparing a beverage by injecting the fluid in the capsule (100) such that the fluid interacts with the beverage component (103),
- 206) transferring the capsule (100) from the preparation unit (2) to the crushing unit (4) after the capsule (100) has been processed in the preparation unit (2), and
- 208) moving the crushing element (7) to crush the capsule body (101) such that at least part of the beverage component (103) is released from the cavity (102).

## Patentansprüche

1. Zubereitungsmaschine (1) zum Zubereiten eines Getränks durch Einspritzen eines Fluids in eine Kapsel (100), wobei die Kapsel (100) i) einen Kapselkörper (101), der einen Hohlraum (102) definiert, und ii) eine Getränkekomponente (103), die innerhalb des Hohlraums (102) enthalten ist, aufweist, wobei die Zubereitungsmaschine (1) umfasst:
- eine Zubereitungseinheit (2), die i) eine Zubereitungskammer (6) zum Aufnehmen der Kapsel (100) und ii) Mittel zum Einspritzen des Fluids in die Kapsel (100), um das Getränk zuzubereiten, aufweist, und
- eine Zerkleinerungseinheit (4), die ein Zerkleinerungselement (7) aufweist, wobei das Zerkleinerungselement (7) bewegbar ist, um den Kapselkörper (101) derart zu zerkleinern, dass mindestens ein Teil der Getränkekomponente (103) aus dem Hohlraum (102) freigesetzt wird, nachdem die Kapsel (100) in der Zubereitungseinheit (2) verarbeitet wurde,
wobei das Zerkleinerungselement (7) drehbewegbar ist, um den Kapselkörper (101) zu zerkleinern, wobei das Zerkleinerungselement (7) vorzugsweise eine Zerkleinerungsmühle ausbildet, und
wobei das Zerkleinerungselement (7) mindestens ein Zerkleinerungswerkzeug, das eine Vielzahl von scharfen Abschnitten (7.4) aufweist, umfasst,
**dadurch gekennzeichnet, dass** das Zerkleinerungselement (7) mindestens zwei Zerkleinerungswerkzeuge (7.2, 7.3) umfasst, wobei sich die Zerkleinerungswerkzeuge (7.2, 7.3) im Wesentlichen parallel und nahe zueinander erstrecken, wobei die Zerkleinerungswerkzeuge (7.2, 7.3) konfiguriert sind, um sich in entgegengesetzte Richtungen zu drehen.

2. Zubereitungsmaschine (1) nach Anspruch 1, wobei das Zerkleinerungselement (7) einen Zerkleinerer oder einen Schredder einschließt.

3. Zubereitungsmaschine (1) nach einem der vorstehenden Ansprüche, wobei die Zubereitungsmaschine (1) ferner eine Antriebseinheit (10) umfasst, die konfiguriert ist, um das Zerkleinerungselement (7) zu bewegen, wobei die Antriebseinheit (10) einen Motor oder ein manuelles Betätigungsglied einschließt.

4. Zubereitungsmaschine (1) nach einem der vorstehenden Ansprüche, ferner umfassend eine Trenneinheit (16), die konfiguriert ist, um den zerkleinerten Kapselkörper (101) von der Getränkekomponente (103), die aus dem Hohlraum (102) freigesetzt wird, zu trennen.

5. Zubereitungsmaschine (1) nach Anspruch 4, wobei die Trenneinheit (16) ein Filtergitter (18) umfasst, das konfiguriert ist, um den zerkleinerten Kapselkörper (101) zurückzuhalten und um eine Gesamtheit oder einen Teil der Getränkekomponente (103), die aus dem Hohlraum (102) freigesetzt wird, durch das Filtergitter (18) hindurchgehen zu lassen.

6. Zubereitungsmaschine (1) nach einem der vorstehenden Ansprüche, ferner umfassend eine Auffangkammer (20) zum Auffangen der Getränkekomponente (103), die aus dem Hohlraum (102) freigesetzt wird, und des zerkleinerten Kapselkörpers (101), vorzugsweise in getrennten Abschnitten (21, 22) der Auffangkammer (20), wobei die Auffangkammer vorzugsweise Teil der Zerkleinerungseinheit (4) oder der Trenneinheit (16) ist.

7. Zubereitungsmaschine (1) nach einem der vorstehenden Ansprüche, wobei die Zubereitungseinheit (2) mit der Zerkleinerungseinheit (4), mit der Trenneinheit (16), falls vorhanden, und/oder mit der Auffangkammer (20), falls vorhanden, lösbar gekoppelt ist.

8. Zubereitungsmaschine (1) nach einem der vorstehenden Ansprüche, ferner umfassend einen Transferabschnitt (25), der konfiguriert ist, um einen definierten Transfer, vorzugsweise durch die Wirkung von Schwerkraft, der Kapsel (100) von der Zubereitungskammer (6) zu der Zerkleinerungseinheit (4) zu ermöglichen.

9. Zubereitungsmaschine (1) nach einem der vorstehenden Ansprüche, wobei die Zerkleinerungseinheit (4) ferner eine Reinigungsvorrichtung (26) umfasst, wobei die Reinigungsvorrichtung (26) mit einer Fluideinspritzeinheit fluidisch verbunden ist, wobei die Reinigungsvorrichtung (26) konfiguriert ist, um den Kapselkörper (101) mit einem Teil des Fluids zu spülen, nachdem die Kapsel (100) in der Zubereitungseinheit (2) verarbeitet wurde, wobei die Reinigungsvorrichtung (26) stromabwärts der Zerkleinerungseinheit (4) angeordnet ist.

10. Zubereitungsmaschine (1) nach einem der vorstehenden Ansprüche, ferner umfassend eine Abgabeeinheit (28) zum Abgeben des Getränks aus der Zubereitungseinheit (2).

11. Zubereitungsmaschine (1) nach einem der vorstehenden Ansprüche, wobei die Zerkleinerungseinheit (4) konfiguriert ist, um, vorzugsweise in einer lösbaren Weise, mit der Zubereitungseinheit (2) derart gekoppelt zu werden, dass die Kapsel (100) von der Zubereitungskammer (6) zu der Zerkleinerungseinheit (4) transferiert werden kann, wobei die Zerkleinerungseinheit (4) i) das Zerkleinerungselement (7) und ii) eine Antriebsverbindung zum funktionalen Verbinden des Zerkleinerungselements (7) mit einer oder der Antriebseinheit der Zubereitungsmaschine (1) aufweist, um das Zerkleinerungselement (7) selektiv zu bewegen.

12. Verfahren (200) zum Zubereiten eines Getränks mit einer Zubereitungsmaschine (1) nach einem der Ansprüche 1 bis 10, das Verfahren (200) umfassend:
- 202) Aufnehmen einer Kapsel (100) in der Zubereitungskammer (6),
- 204) Zubereiten eines Getränks durch derartiges Einspritzen des Fluids in die Kapsel (100), dass das Fluid mit der Getränkekomponente (103) interagiert,
- 206) Transferieren der Kapsel (100) von der Zubereitungseinheit (2) zu der Zerkleinerungseinheit (4), nachdem die Kapsel (100) in der Zubereitungseinheit (2) verarbeitet wurde, und
- 208) Bewegen des Zerkleinerungselements (7), um den Kapselkörper (101) derart zu zerkleinern, dass mindestens ein Teil der Getränkekomponente (103) aus dem Hohlraum (102) freigesetzt wird.

## Revendications

1. Machine de préparation (1) permettant de préparer une boisson en injectant un fluide dans une capsule (100), la capsule (100) ayant i) un corps de capsule (101) définissant une cavité (102) et ii) un composant de boisson (103) contenu à l'intérieur de la cavité (102), dans laquelle la machine de préparation (1) comprend :
- une unité de préparation (2) ayant i) une chambre de préparation (6) destinée à recevoir la capsule (100) et ii) un moyen destiné à injecter le fluide dans la capsule (100) pour préparer la boisson, et
- une unité d'écrasement (4) ayant un élément d'écrasement (7), l'élément d'écrasement (7) étant mobile de manière à écraser le corps de capsule (101) de telle sorte qu'au moins une partie du composant de boisson (103) est libérée de la cavité (102) après que la capsule (100) a été traitée dans l'unité de préparation (2),
dans laquelle l'élément d'écrasement (7) est mobile en rotation de manière à écraser le corps de capsule (101), l'élément d'écrasement (7) formant de préférence un broyeur, et
dans laquelle l'élément d'écrasement (7) comprend au moins un outil d'écrasement ayant une pluralité de sections tranchantes (7.4),
**caractérisée en ce que** l'élément d'écrasement (7) comprend au moins deux outils d'écrasement (7.2, 7.3), lesdits outils d'écrasement (7.2, 7.3) s'étendant sensiblement parallèlement et à proximité l'un de l'autre, lesdits outils d'écrasement (7.2, 7.3) étant conçus pour tourner dans des directions opposées.

2. Machine de préparation (1) selon la revendication 1, dans laquelle l'élément d'écrasement (7) comporte un dispositif d'écrasement ou un dispositif de déchiquetage.

3. Machine de préparation (1) selon l'une quelconque des revendications précédentes, dans laquelle la machine de préparation (1) comprend en outre une unité d'entraînement (10) conçue pour déplacer l'élément d'écrasement (7), l'unité d'entraînement (10) comportant un moteur ou un actionneur manuel.

4. Machine de préparation (1) selon l'une quelconque des revendications précédentes, comprenant en outre une unité de séparation (16) conçue pour séparer le corps de capsule (101) écrasé du composant de boisson (103) libéré de la cavité (102).

5. Machine de préparation (1) selon la revendication 4, dans laquelle l'unité de séparation (16) comprend une grille de filtrage (18) conçue pour retenir le corps de capsule (101) écrasé et pour laisser passer la totalité ou une partie du composant de boisson (103) libéré de la cavité (102) à travers la grille de filtrage (18).

6. Machine de préparation (1) selon l'une quelconque des revendications précédentes, comprenant en outre une chambre de collecte (20) destinée à collecter le composant de boisson (103) libéré de la cavité (102) et le corps de capsule (101) écrasé, de préférence, dans des sections séparées (21, 22) de la chambre de collecte (20), la chambre de collecte faisant de préférence partie de l'unité d'écrasement (4) ou de l'unité de séparation (16).

7. Machine de préparation (1) selon l'une quelconque des revendications précédentes, dans laquelle l'unité de préparation (2) est accouplée de manière amovible à l'unité d'écrasement (4), à l'unité de séparation (16), si elle est présente, et/ou à la chambre de collecte (20), si elle est présente.

8. Machine de préparation (1) selon l'une quelconque des revendications précédentes, comprenant en outre une section de transfert (25) conçue pour permettre un transfert défini, de préférence, par l'action de gravité, de la capsule (100) de la chambre de préparation (6) à l'unité d'écrasement (4).

9. Machine de préparation (1) selon l'une quelconque des revendications précédentes, dans laquelle l'unité d'écrasement (4) comprend en outre un dispositif de nettoyage (26), le dispositif de nettoyage (26) étant relié de manière fluidique à l'unité d'injection de fluide, le dispositif de nettoyage (26) étant conçu pour rincer le corps de capsule (101) avec une partie du fluide après que la capsule (100) a été traitée dans l'unité de préparation (2), le dispositif de nettoyage (26) étant agencé en aval de l'unité d'écrasement (4).

10. Machine de préparation (1) selon l'une quelconque des revendications précédentes, comprenant en outre une unité de distribution (28) destinée à distribuer la boisson hors de l'unité de préparation (2).

11. Machine de préparation (1) selon l'une quelconque des revendications précédentes, l'unité d'écrasement (4) étant conçue pour être accouplée, de préférence de manière amovible, à l'unité de préparation (2) de telle sorte que la capsule (100) peut être transférée de la chambre de préparation (6) à l'unité d'écrasement (4), l'unité d'écrasement (4) ayant i) l'élément d'écrasement (7) et ii) une liaison d'entraînement pour relier de manière fonctionnelle l'élément d'écrasement (7) à une ou à l'unité d'entraînement de la machine de préparation (1) pour déplacer de manière sélective l'élément d'écrasement (7).

12. Procédé (200) permettant de préparer une boisson avec une machine de préparation (1) selon l'une quelconque des revendications 1 à 10, le procédé (200) comprenant :
- 202) la réception d'une capsule (100) dans la chambre de préparation (6),
- 204) la préparation d'une boisson en injectant le fluide dans la capsule (100) de telle sorte que le fluide interagit avec le composant de boisson (103),
- (206) le transfert de la capsule (100) de l'unité de préparation (2) à l'unité d'écrasement (4) après que la capsule (100) a été traitée dans l'unité de préparation (2), et
- (208) le déplacement de l'élément d'écrasement (7) pour écraser le corps de capsule (101) de telle sorte qu'au moins une partie du composant de boisson (103) est libéré de la cavité (102),
